# EUROPEAN PATENT SPECIFICATION

(11) **EP 3 111 688 B1**
(45) Date of publication and mention of the grant of the patent: **21.10.2020**
(21) Application number: 15754893.4
(22) Date of filing: 27.02.2015
(51) Int. Cl.: H04W 76/22, H04W 40/36, H04L 12/745, H04W 88/16, H04W 8/26, H04W 76/32

(54) **SYSTEM AND METHOD FOR OPTIMIZED ROUTE MOBILITY MANAGEMENT**
SYSTEM UND VERFAHREN ZUR OPTIMIERTEN ROUTENMOBILITÄTSVERWALTUNG
SYSTÈME ET PROCÉDÉ DE GESTION DE MOBILITÉ DE ROUTE OPTIMISÉE

(30) Priority: 27.02.2014 US 201461945521 P; 26.02.2015 US 201514631928
(43) Date of publication of application: 04.01.2017
(73) Proprietor: Huawei Technologies Co., Ltd., Longgang District Shenzhen, Guangdong 518129 (CN)
(72) Inventor: CHAN, Hinghung Anthony, Plano, TX 75093 (US); JOHN, Kaippallimalil, Mathew, Richardson, TX 75082 (US)
(74) Representative: Pfenning, Meinig & Partner mbB
(86) International application number: PCT/CN2015/073372
(87) International publication number: WO 2015/127898

(56) References cited:
- WO-A1-2008/026977
- CN-A- 101 663 878
- CN-A- 102 111 744
- US-A1- 2008 084 847
- US-A1- 2008 259 925
- US-A1- 2013 230 021
- US-B1- 6 865 611

## Description

### TECHNICAL FIELD

The present disclosure relates generally to wireless communications, and more particularly, to a system and method for optimized route mobility management.

### BACKGROUND

Some existing mobility management protocols, including Mobile IP and 3GPP General Packet Radio Service (GPRS) Tunneling Protocol (GTP), use tunneling, which results in more complex, non-optimized routes. For example, in Mobile IP, a mobile node gets a home address from its home network and a care-of-address when it is attached to a visiting network. A mobility anchor, also known as a home agent in the home network, intercepts the packets addressed to the home address coming from a correspondent node. The mobility anchor then forwards the packet to the care-of-address. Even if the correspondent node and mobile node are close to each other, the route will still have to route to the mobility anchor which can be far away. In this situation, routing via the mobility anchor leads to non-optimized routing and longer packet delay.

US 2013/230021 A1 describes a method and apparatus for supporting dynamic and distributed mobility management (DMM). A wireless transmit/receive unit (WTRU) may attach to a first distributed gateway (D-GW), and configure a first Internet protocol (IP) address based on a prefix locally provided by the first D-GW. The WTRU may move and attach to a second D-GW while carrying out an on-going communication session with a correspondent node (CN). The WTRU may configure a second IP address based on a prefix provided by the second D-GW. The WTRU may use the first IP address for carrying out the on-going session and use the second IP address for a new communication session.

US 2008/259925 A1 describes a method for detecting, by a router, a first router advertisement message from an attachment router that provides an attachment link used by the router, the first router advertisement message specifying a first IPv6 address prefix owned by the attachment router and usable for address autoconfiguration on the attachment link. The router detects an unsolicited delegated IPv6 address prefix from the attachment router and that is available for use by the router. The router claims a second IPv6 address prefix from at least a portion of the delegated IPv6 address prefix, for use on at least one ingress link of the router.

### SUMMARY

According to one embodiment, there is provided a method for optimized route mobility management. The method includes determining that a mobile node moves from a first network to a second network. The method also includes, in response to determining the movement of the mobile node, receiving, at an access/gateway router of the second network, a prefix delegation message from a router of the first network, the prefix delegation message configured for movement of an IP prefix associated with a communication session of the mobile node from the first network to the second network, the prefix delegation message comprising the IP prefix previously allocated to the first network. The method further includes updating a routing table to reflect the moved IP prefix; deprecate the IP prefix; initialize a deprecation timer with a predetermined deprecation time period for the deprecated IP prefix; re-initialize the deprecation timer with the predetermined deprecation time period if the IP prefix is used in the first network; and expire the deprecated IP prefix when the deprecation timer expires.

According to another embodiment, there is provided an apparatus for optimized route mobility management. The apparatus includes at least one memory and at least one processor coupled to the at least one memory. The at least one processor is configured to determine that a mobile node moves from a first network to a second network; in response to determining the movement of the mobile node, receive a prefix delegation message from a router of the first network, the prefix delegation message configured for movement of an IP prefix associated with a communication session of the mobile node from the first network to the second network, the prefix delegation message comprising the IP prefix previously allocated to the first network; and update a routing table to reflect the moved IP prefix; deprecate the IP prefix; initialize a deprecation timer with a predetermined deprecation time period for the deprecated IP prefix; re-initialize the deprecation timer with the predetermined deprecation time period if the IP prefix is used in the first network; and expire the deprecated IP prefix when the deprecation timer expires.

According to yet another embodiment, there is provided a non-transitory computer readable medium embodying a computer program. The computer program includes computer readable program code for determining that a mobile node moves from a first network to a second network; in response to determining the movement of the mobile node, receiving, at an access/gateway router of the second network, a prefix delegation message from a router of the first network, the prefix delegation message configured for movement of an IP prefix associated with a communication session of the mobile node from the first network to the second network, the prefix delegation message comprising the IP prefix previously allocated to the first network; and updating a routing table to reflect the moved IP prefix; deprecate the IP prefix; initialize a deprecation timer with a predetermined deprecation time period for the deprecated IP prefix; re-initialize the deprecation timer with the predetermined deprecation time period if the IP prefix is used in the first network; and expire the deprecated IP prefix when the deprecation timer expires. The invention is carried out according to the appended independent claims. Optional features of the invention are carried out according to the dependent claims. However, technical descriptions of apparatus, products and/or methods in the description and/or drawings which are not covered by the claims are presented not as embodiments of the invention but as background art or examples useful for understanding the invention.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
FIGURE 1 illustrates an example of a non-optimized route in a Mobile IP network;
FIGURE 2 illustrates an example of optimized route mobility management;
FIGURE 3 illustrates an example of an IP route using a new session identifier when a new session is opened or when mobility support is already provided at a higher layer;
FIGURE 4 illustrates an example of an IP route using an original session identifier with mobility management tunneling to route via the route modification function in the original network;
FIGURE 5 illustrates an example of using optimal route mobility management for moving an IP address from one network to another network;
FIGURE 6 illustrates an example network once a tunnel is torn down following completion of a mobility management tunneling operation as described in FIGURES 4 and 5;
FIGURE 7 illustrates an example of expiration of optimized route mobility management when it is not needed for an active session;
FIGURES 8 through 12 illustrate example mobility management scenarios in networks with control plane - data plane separation;
FIGURE 13 illustrates an example communication system 1300 that may be used for implementing the devices and methods disclosed herein;
FIGURES 14A and 14B illustrate example devices that may be used for implementing the methods and teachings disclosed herein; and
FIGURE 15 illustrates a method for optimized route mobility management according to this disclosure.

### DETAILED DESCRIPTION

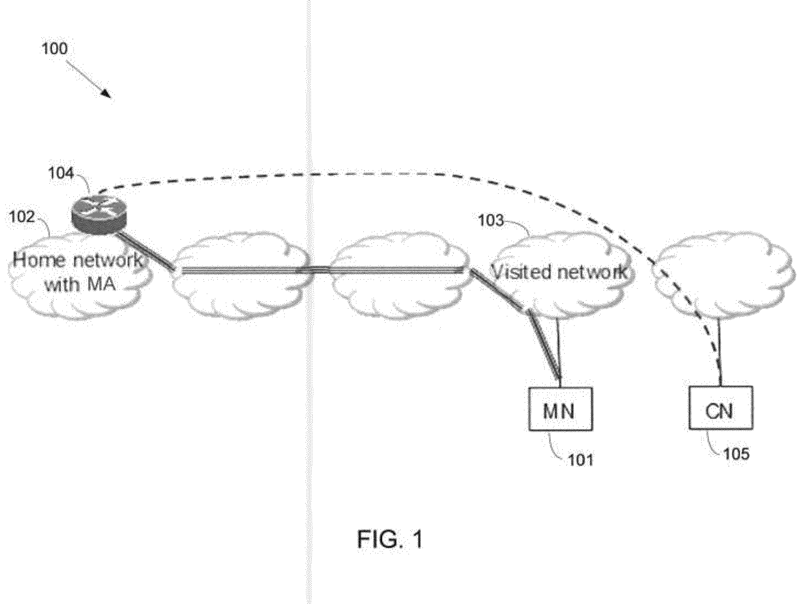

FIGURES 1 through 15, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURE 1 illustrates an example of a non-optimized route in a Mobile IP network 100. In mobility management protocols such as Mobile IP, a mobile node (MN) 101 gets a home address (HoA) from its home network 102 and a care-of-address (CoA) when it is attached to a visiting network 103. A mobility anchor (MA) 104, also known as a home agent HA in the home network 102, intercepts the packets addressed to the HoA coming from a correspondent node (CN) 105. The MA 102 then forwards the packet to the CoA. Even if the CN 105 and the MN 101 are close to each other, the route of the packet still must pass to the MA 104, which can be far away. In this situation, routing via the MA 104 leads to non-optimized routing and longer packet delay.

It is possible, in principle, to move the IP address owned by the MN 101 from the home network 102 to the visited network 103, and then the routing protocol will run between the routers so that the new routing table will route the packet to the MN 101 at the visited network 103. However, there are a number of factors that make this approach not practical. First, the routing table takes time to converge. The time to converge is usually too long to support a seamless handoff with session continuity. Second, a routing table size is generally minimized by aggregation, whereas each move of an IP address to a different router is an additional entry to the routing table for the other routers to learn. As more and more MNs perform a handover and carry their IP address to the new network, the size of the routing tables increases.

Examples of this disclosure use a distributed mobility management approach. The network configuration of the embodiments described herein will be shown in terms of the following network mobility management functions: session identification (SID), location management (LM), and route modification (RM) functions. These functions will now be described.

Session identifier (SID): A MN may use a SID to enable session continuity for an application during handover. Alternatively, a separate IP address different from the routing IP address, such as that used previously in the home network where the application was initiated, may be used as the SID. Then, the SID is tied to the IP prefix function at the home network. Also, a MN with multiple ongoing applications may use multiple prefixes. The SID function is able to associate each prefix with the applications actively using the prefix and release a prefix when no application needs to use the prefix anymore.

Location management (LM): The Internet already manages information of static hosts to enable routing using the IP address of each host as a locator. The LM function keeps track of the internetwork location of a MN, which may change its IP address as it moves. The information may associate with each SID, the IP routing address of the MN, or of a node that can forward packets destined to the MN. In a client-server model, location query and update messages may be exchanged between the client (LMc) and the server (LMs). Optionally, one or more proxies may exist between the LMs and the LMc (e.g., LMs-proxy-LMc). In such a case, to the LMs, the proxy behaves like the LMc. To the LMc, the proxy behaves like the LMs.

Route modification (RM) function: The RM function changes the route as determined by the existing routing tables. In some systems (e.g., software defined networks (SDNs)), the RM function can be separated into the data plane (RM-DP) and control plane (RM-CP) functions.

Prefix/prefixes delegation (PD): An access router responsible for the IP addresses of a number of nodes in a network. The access router allocates the IP addresses to the nodes in its network. The router will defend these IP prefixes. An IP prefix delegation (PD) function delegates a range of IP prefixes for which the router is originally responsible to another router in the network. The delegation is usually from one access router in a network to another access router in a sub-network of the original network of the access router.

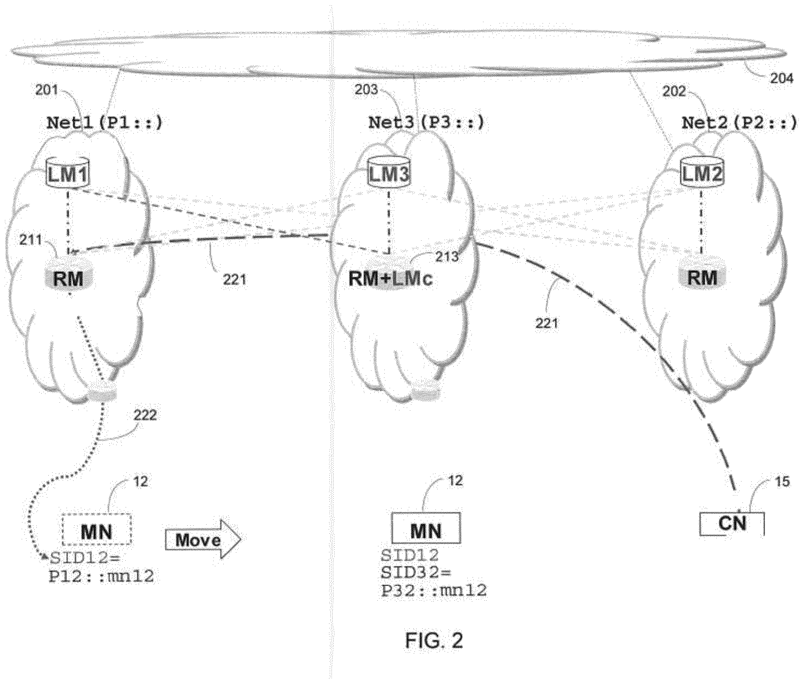

FIGURE 2 illustrates an example of optimized route mobility management. In the figure, a mobile node moves from a first network to a third network while communicating with a correspondent node in a second network. As shown in FIGURE 2, a plurality of networks, Net1 201, Net2 202, and Net3 203, each allocate a number of IP prefixes, which are aggregatable to P1::, P2:: and P3::, respectively. Each of the networks 201-203 includes a LM server (e.g., LM1-LM3) and an access/gateway router that includes a RM function. In some embodiments, the LM servers LM1-LM3 can comprise a distributed LM server with a distributed LM database. In some examples, each network allocates 64 IP prefixes, although it should be understood that the networks can allocate different numbers of prefixes. In some embodiments, the networks 201-203 are subnetworks of a larger network 204. While various figures of this disclosure illustrate three networks (or subnetworks) 201-203, it will be understood that the number of networks (or subnetworks) may be more or fewer than three.

Optimized methods for route mobility management are achieved by moving the IP address of a mobile node as the mobile node moves from one network to another. The disclosed management methods can be used with or without network function virtualization (NFV) / software defined network (SDN). Without NFV/SDN, the address is moved using an IP address allocation message. The packets are then routed using the direct IP route after the subsequent routing table updates are complete. Without NFV/SDN, the routing table updates may be optionally preceded by tunneling so that the updates do not need to be performed immediately. The updates may be batched and the route information exchange may take place at regular intervals without causing excessive routing protocol messages. The same movement of the IP address works with or without NFV/SDN to ensure backward compatibility and smooth transition to NFV/SDN for mobility management.

A mobile node 12 originally attaches to Net1 201 and is allocated the IP prefix P12::/64. Using this prefix, the mobile node 12 configures an IP address of the format P12::mn12. The MN 12 has an active communication session (e.g., a voice call or video conference) with a correspondent node 15 in Net2 202 in this example. The session identifier for this session at the MN 12, SID12, is equal to the IP address of the MN 12, P12::mn12. The incoming packets to the MN 12 from the CN 15 are destined to SID12, and the packets follow the route indicated at 221-222 to traverse from the CN 15 in Net2 202 to the RM function at the access/gateway router 211 in Net1 201, and then from the RM function at the access/gateway router 211 to the MN 12 in Net1 201.

While this communication session is active, the MN 12 moves to Net3 203. The MN 12 may exchange L2 messages with a new Point of Attachment in Net3 203 in the example. The MN 12 may also send a network discovery message or a route solicitation (RS) message to determine the IP prefix to use in Net3 203. The message may include its current IP address and MAC address.

In accordance with network-based mobility support principles, the access/gateway router 213 checks with the distributed LM server (where the servers LM1-LM3 comprise a distributed LM server as described above) to determine whether an IP address has been allocated to the MN 12, which is identified with the MAC address provided by the MN 12. If so, the RM function at the access/gateway router 213 in Net3 203 broadcasts a Route Advertisement (RA) message with the existing prefix of MN 12 so that the MN 12 can continue to use this prefix.

In addition, the access/gateway router 213 allocates a new prefix P32::/64 to the MN 12. The MN 12 uses the new prefix to configure a new IP address P32::mn12. The original prefix of the MN 12 of Net1 201 (P12::/64) is deprecated. A deprecated element or attribute is one that has been outdated by a newer construct or constructs. The MN 12 may then continue to use the session identifier SID12 for the ongoing sessions that need mobility support. In some embodiments, a deprecation timer for the deprecated prefix (of Net1 201) may be used. The deprecation timer for the deprecated prefix may expire after all such ongoing sessions have closed. Otherwise, the deprecation timer may renew if there are still active ongoing sessions using the deprecated prefix. Once the deprecation timer expires, the deprecated prefix expires and will not be used by the MN 12.

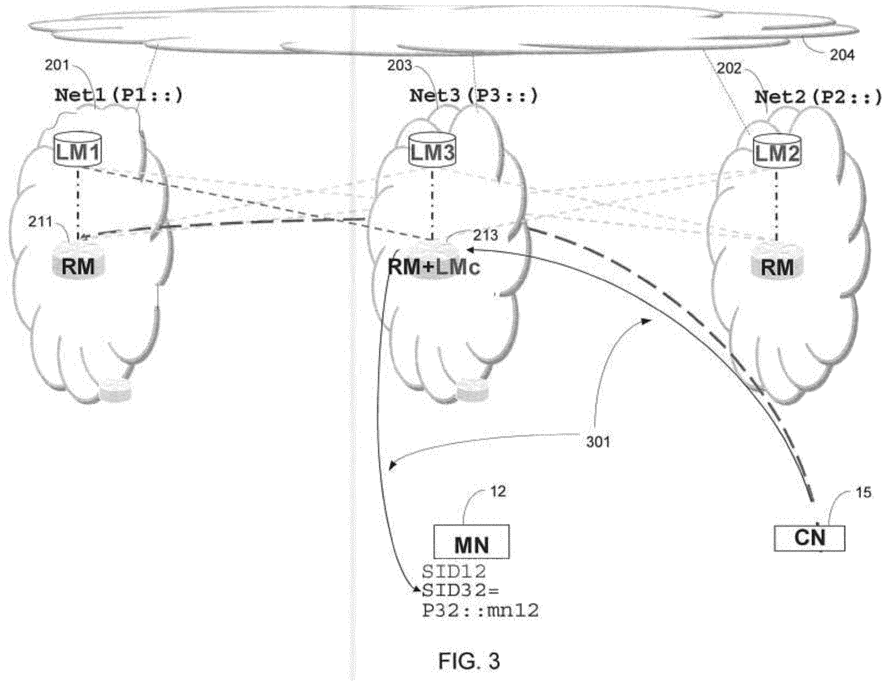

In some scenarios, mobility support is not always needed and can be bypassed. For example, when the MN 12 opens a new session with the CN 15, the MN 12 may use the new session ID SID32, which is equal to the IP address P32::mn12. In other scenarios, mobility support may be provided at a higher layer in such a manner that any current communication applications may continue after changing over to the new session with the new session ID. For example, FIGURE 3 illustrates an example of an IP route using a new session ID (SID32) when a new session is opened or when mobility support is already provided at a higher layer. As shown in FIGURE 3, for a new communication session between the MN 12 and the CN 15, the route for the incoming packets from the CN 15 to the MN 12 using the new session ID SID32 is indicated at 301.

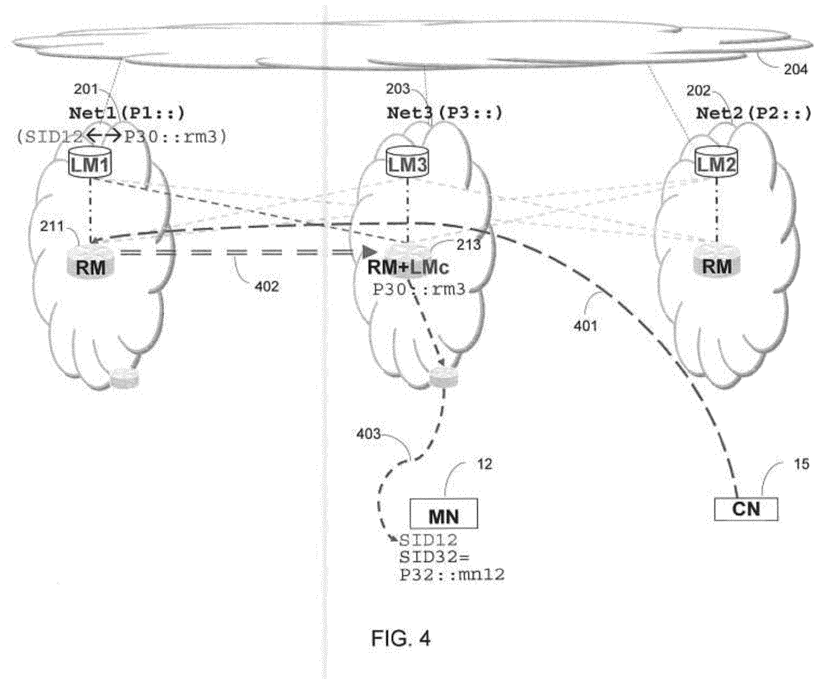

An ongoing communication session may require session continuity but lack upper layer mobility support. In such a case, the ongoing session may continue to use the original session ID SID12. For example, FIGURE 4 illustrates an example of an IP route using an original session identifier with mobility management tunneling to route via the RM function at the access/gateway router 211 in the original network. As shown in FIGURE 4, the location management client (LMc) function, which collocates with the RM function at the access/gateway router 213, sends location update information to the location management server LM1 in Net1 201 to associate the session identifier SID12 with the IP address P30::rm3 of the RM function in Net3 203. The incoming packets to the MN 12 from the CN 15 are destined to SID12 and follow the route indicated at 401-403 in FIGURE 4. The packets first arrive in Net1 201 at the RM function at the access/gateway router 211 along the path 401. The RM function uses the LM information and tunnels the packets to the RM function at the access/gateway router 213 along a tunnel 402. The RM function at the access/gateway router 213 then forwards the packet to the MN 12 using a local network mechanism 403 such as layer 2 routing.

In general, the route 401-403 via the RM function at the access/gateway router 211 is non-optimal and requires establishment and maintenance of the tunnel 402 between the RM functions at the access/gateway router 211 and the access/gateway router 213, both of which need to store and maintain the context for the tunnel. It will be shown herein that this tunnel may only be needed temporarily while an optimized route is being established. A tunnel timer with a predetermined tunnel time period can be set up and initialized in the tunnel establishment process. When the tunnel timer expires, the tunnel can be torn down so that both RM functions at the routers 211-213 may delete the corresponding context.

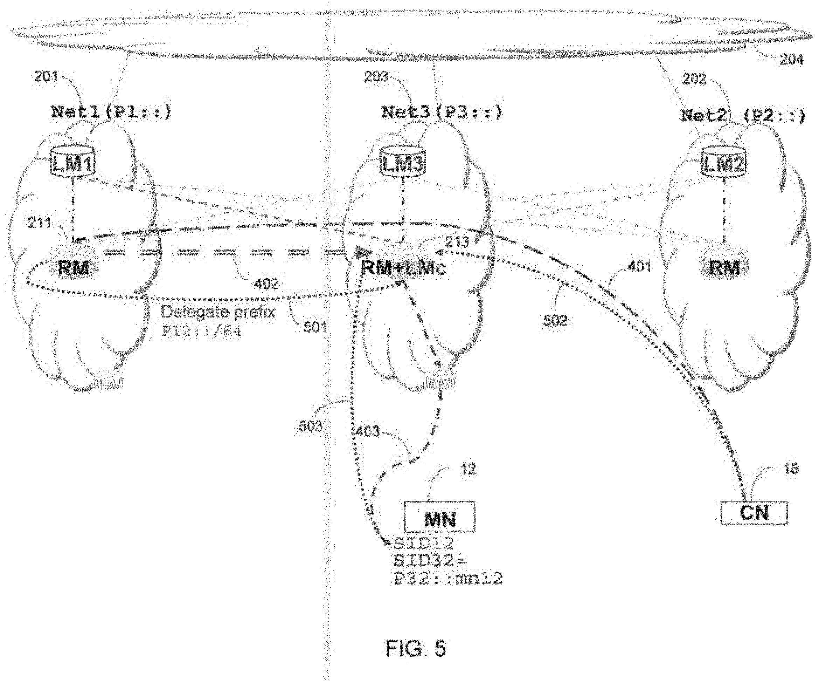

FIGURE 5 illustrates an example of using optimal route mobility management for moving an IP address from one network to another network. As shown in FIGURE 5, the anchor of the IP prefix P12::/64 is moved from the RM function at the access/gateway router 211 to the RM function at the router 213 by sending a prefix delegation message from the access/gateway router 211 to the access/gateway router 213, as indicated at 501. Once delegation occurs, the IP prefix P12::/64 is then owned by the router 213 until the prefix delegation expires. From that point in time, the RM function at the router 213 defends the IP prefix P12::/64. The route protocol then updates the routing table associated with each router 211-213 to reflect the moved IP prefix P12::/64. With the updated routing table, the incoming packets destined to SID12 from the CN 15 to the MN 12 are routed directly as indicated by the route lines 502-503 in FIGURE 5.

The routing table update may be limited in scope depending on the network configuration. In general, the update will not go higher than necessary, and may not go beyond a gateway, a peering point, or a border gateway that is common to both Net1 201 and Net3 203. For example, if Net1 201 and Net3 203 are both sub-networks of the network 204, or if the network 204 is a common transit network to Net1 201 and Net 3 203, then the routing table update from Net3 203 will not go beyond the network 204.

The routing table update does not need to be performed immediately, since frequent, immediate routing table updates may cause excessive signaling. In some embodiments, the routing update can be postponed until a later time. For example, when a number of MNs are performing handovers, the various route updates may be batched together and held until a regularly scheduled routing table batch update event occurs using the routing protocol. Excessive signaling can thus be avoided.

When multiple route updates are batched together, the routing table may take time to update. Depending on the requirements of a particular application, the time for routing table updates may or may not be sufficiently short for the application. If the routing table update time does not exceed the required handover delay of the application, the mobility management operations to set up the tunnel 402 shown in FIGURE 4 and FIGURE 5 may not be needed and may be omitted.

Conversely, if the routing table update time exceeds the required handover delay of the application, the mobility management tunneling operation proceeds first. The packets are first routed via the RM function at the router 211 in Net1 201. Then, other than taking a non-optimal route, mobility support is provided according to the need. After the mobility management tunnel 402 is in place, the optimal-route mobility management operation is also performed. Then the optimal route 502-503 will be used after the IP prefix from the RM function at the router 211 has been moved to the RM function at the router 213 and the routing table updates are complete.

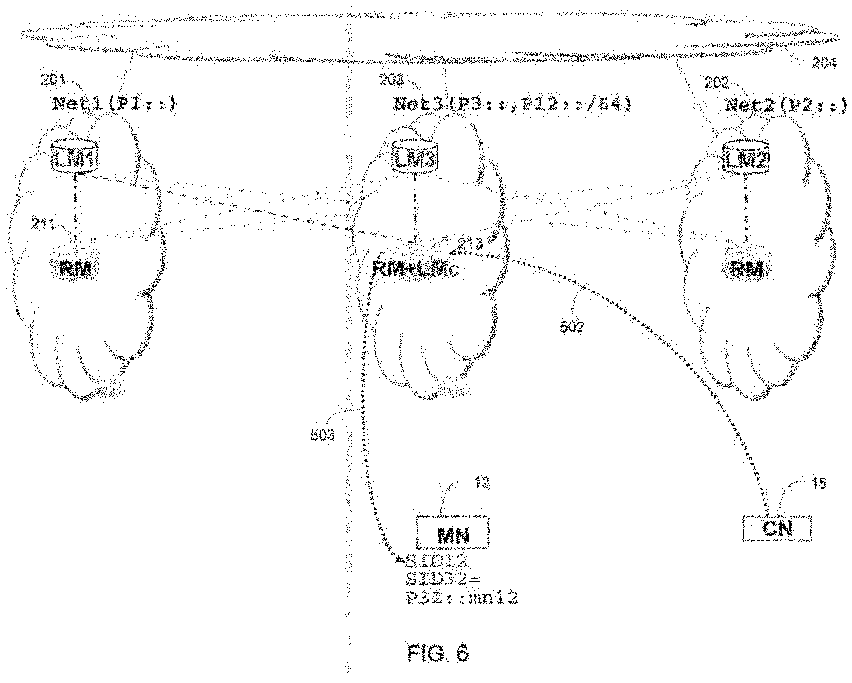

When the mobility management tunnel 402 is no longer needed (e.g., upon expiration of the tunnel timer), the tunnel 402 is torn down, as shown in FIGURE 6. However, the location management server LM1 for Net1 201 still remembers that SID12 has been allocated to P30::rm3 so that the prefix P12::/64 is not available in Net1 201 (instead, the prefix P12::/64 is allocated to Net3 203).

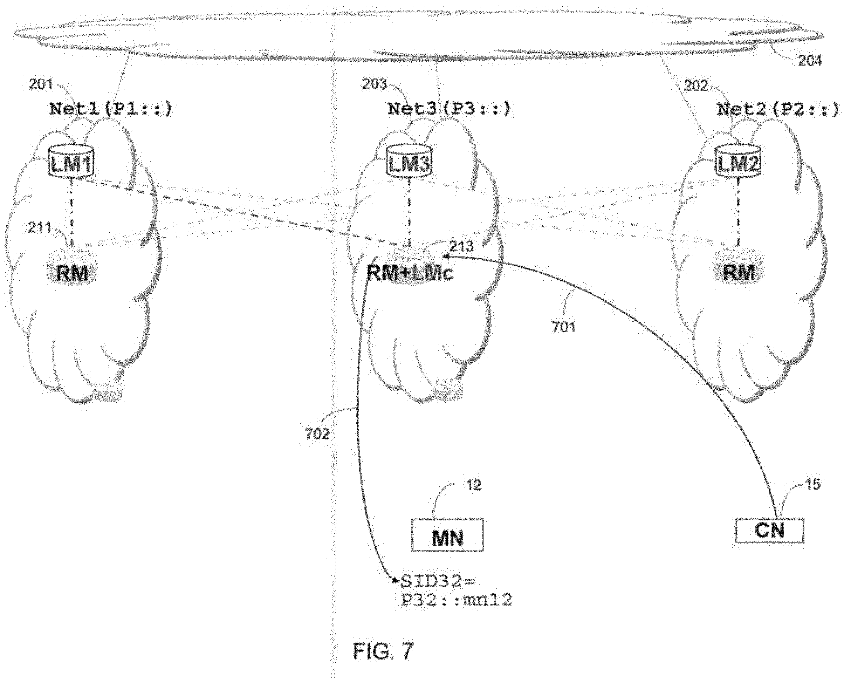

FIGURE 7 illustrates an example of expiration of optimized route mobility management when it is no longer needed for any active session. In some scenarios, a delegation timer may be set in the prefix delegation to move the IP prefix or IP address from Net1 201 to Net3 203. The delegation timer may be initialized with a predetermined delegation time period. The delegation timer may expire after the deprecated prefix has expired. Otherwise the delegation timer may renew if the deprecated prefix has not yet expired. The deprecated prefix may remain in the deprecated state or may be renewed until the mobility support for the applications that were handed over from Net1 201 to Net3 203 is no longer needed. For example, such applications may have terminated and there may be no more active sessions that were handed over and are still using SID12. The deprecated prefix P12::/ in Net 3 203 may then expire. In such a case, there is no need to keep the IP prefix P12::/ in Net3 203, so the prefix may expire. The MN 12 then has only the one session identifier SID32, as shown in FIGURE 7. Thus, the incoming packets from the CN 15 to the MN 12 are routed using a route with session ID SID32, as indicated by the route lines 701-702. The routing tables may then be updated to reflect that the prefix P12::/ is again owned by Net1 201. However, it is not necessary to perform the routing table update(s) immediately. Such routing update(s) can be performed in batch mode together with other updates in order to minimize signaling.

After the delegation timer to delegate the prefix to Net3 203 has expired, the prefix P12::/64 is made available in Net1 201. Then the location management server LM1 for Net1 201 no longer needs to keep the information that P12::/64 was allocated to Net3 203.

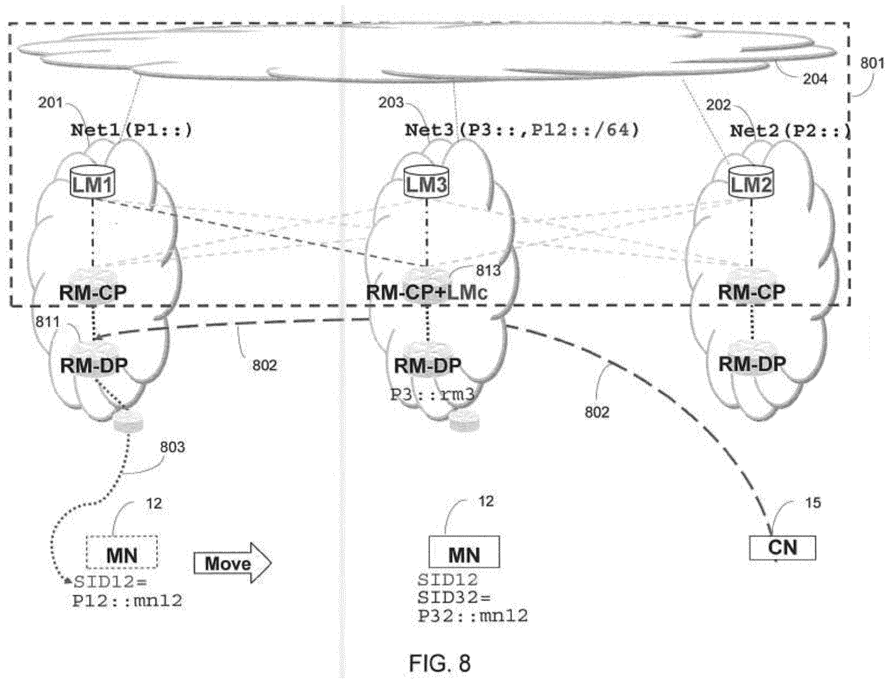

FIGURES 8 through 12 illustrate example mobility management scenarios in networks with control plane (CP) - data plane (DP) separation. FIGURES 8 through 12 are similar to FIGURES 2 through 7, in that they depict three networks, Net1 201, Net2 202, and Net3 203, that allocate a number of IP prefixes, which are aggregatable to P1::, P2:: and P3::, respectively. In contrast to the earlier figures, in FIGURES 8 through 12, the control plane functions and the data plane functions are separated. The functions inside the dashed line box 801 are control plane functions, which can be collocated and centralized. For example, the location management (LM) functions (inside box 801) are part of the control plane, while the data packet processing (outside of box 801) is part of the data plane. Route modification (RM) functions can be split between the control plane and the data plane. For example, some RM functions are associated with the data packet processing and are part of the data plane (RM-DP functions), while other RM functions (e.g., delegate prefix functions, communication with other routers, etc.) are part of the control plane (RM-CP functions). In some embodiments, the control plane functions in box 801 may be centralized in a single data center. Thus, communication between the various control plane functions can be very quick. In some examples, the control plane functions in box 801 are embodied in a controller of a software-defined network (SDN).

As shown in FIGURE 8, the mobile node 12 originally attaches to Net1 201 and is allocated the IP prefix P12::/64. Using this prefix, the mobile node 12 configures an IP address of the format P12::mn12. The MN 12 has an active communication session (e.g., a voice call or video conference) with a correspondent node 15 in Net2 202. The session identifier for this session at MN 12, SID12, is equal to the IP address P12::mn12. The incoming packets to the MN 12 from the CN 15 are destined to SID12, and the packets follow the route indicated at 802-803 to traverse from the CN 15 in Net2 202 to the RM-DP function at the router 811 in Net1 201 and then from the RM-DP function at the router 811 to the MN 12 in Net1 201.

While this communication session is active, the MN 12 moves to Net3 203. The MN 12 may exchange L2 messages with a new Point of Attachment. The MN 12 may also send a network discovery message or a route solicitation (RS) message to determine the IP prefix. The message includes its current IP address and MAC address.

In accordance with network-based mobility support principles, the access-gateway router 813 checks with the distributed LM server (where the servers LM1-LM3 comprise a distributed LM server as described above) to determine whether an IP address has been allocated to the MN 12, which is identified with the MAC address provided by the MN 12. If so, the RM-CP function at the access/gateway router 813 in Net3 203 broadcasts a Route Advertisement (RA) message with the existing prefix of MN 12 so that the MN 12 can continue to use this prefix.

In addition, the access/gateway router 813 allocates a new prefix P32::/64 to the MN 12. The MN 12 uses the new prefix to configure a new IP address P32::mn12 for Net 3 203. This new IP address will be used for applications that are started while the MN 12 is in Net3 203. The original prefix of the MN 12 (P12::/64) for Net1 201 is deprecated. The MN 12 may then continue to use the session identifier SID12 in Net3 203 for the ongoing sessions that need mobility support. In some embodiments, a deprecation timer for the deprecated prefix (of Net1 201) may be used. The deprecation timer for the deprecated prefix may expire after all such ongoing sessions have closed. Otherwise, the deprecation timer may renew if there are still active ongoing sessions using the deprecated prefix. Once the deprecation timer expires, the deprecated prefix expires and will not be used by the MN 12.

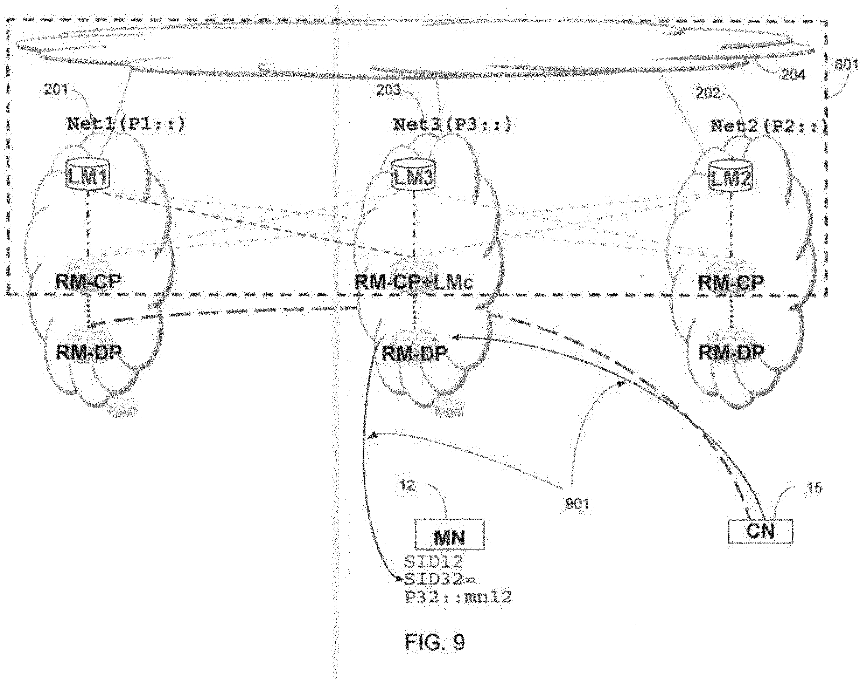

In some scenarios, mobility support is not always needed and can be bypassed. For example, when the MN 12 opens a new session with the CN 15, the MN 12 may use the new session ID SID32, which is equal to P32::mn12. In other scenarios, mobility support may be provided at a higher layer in such a manner that any current communication applications may continue after changing over to the new session with the new session ID. For example, FIGURE 9 illustrates an example of an IP route using a new session ID (SID32) when a new session is opened or when mobility support is already provided at a higher layer. As shown in FIGURE 9, for a new communication session between the MN 12 and the CN 15, the route for the incoming packets from the CN 15 to the MN 12 using the new session ID SID32 is indicated at 901.

An ongoing communication session may require session continuity but lack upper layer mobility support. In such a case, the ongoing session may continue to use the original session ID SID12.

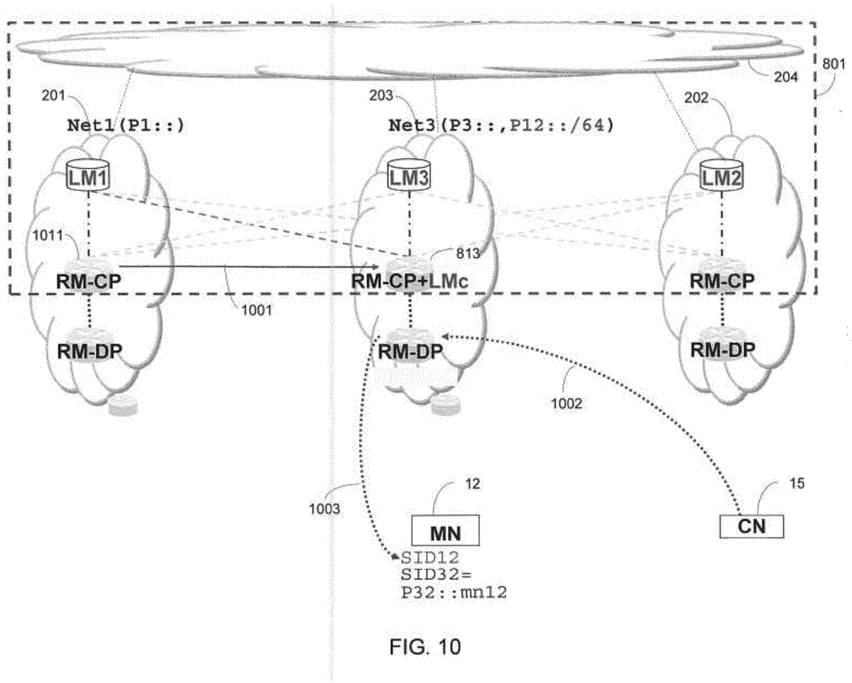

FIGURE 10 illustrates an example of using optimal route mobility management with a centralized control plane. As shown in FIGURE 10, the anchor of the IP prefix P12::/64 is moved from the RM-CP function at the router 1011 to the RM-CP function at the access router 813 by sending a prefix delegation message from the router 1011 to the access router 813, as indicated at 1001. Once delegation occurs, the IP prefix P12::/64 is then owned by the access router 813 until the prefix delegation expires. From that point in time, the RM-CP function at the access router 813 defends the IP prefix P12::/64. The route protocol will therefore update the routing table. With the updated routing table, the incoming packets destined to SID12 from the CN 15 to the MN 12 are routed directly as indicated by the route lines 1002-1003 in FIGURE 10.

With the separation of the control plane from the data plane, the prefix delegation from the RM-DP function at Net1 201 to the RM-DP function at Net3 203 may be only schematic. That is, the actual messaging may be realized with a centralized controller sending one or more updates to the forwarding tables of the IP routers or Layer 2 switches. With centralized control, the updates can be completed in a shorter time than the time required when running a distributed routing protocol. In some embodiments, the time to complete the forwarding table update may be fast enough to support a handover with session continuity.

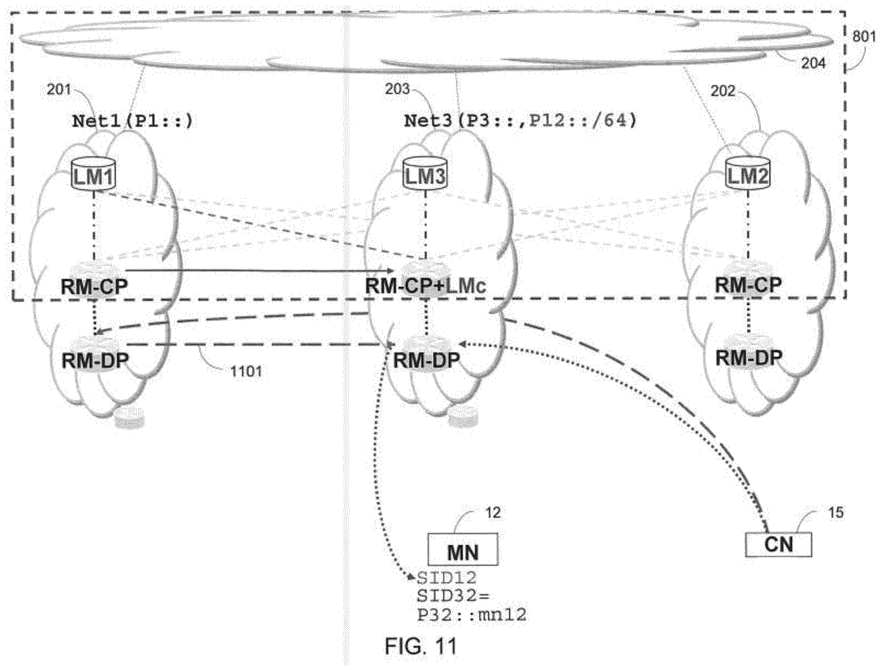

In some embodiments, one or more incoming packets may already be in-flight during the handover. The location management server LM1 for Net1 201 keeps the information that the prefix P12::/64 has been allocated to the RM-DP function at Net3 203. When the in-flight packets arrive at the RM-DP function at Net1 201, the packets may be buffered if the routing table update process has not yet completed. As shown in FIGURE 11, once the routing tables have been updated, these packets may follow the route 1101, as described in the updated routing table(s), to route to the RM-DP function at Net3 203.

In some embodiments, when there are no more active applications using the session identifier SID12, the deprecated prefix P12::/64 in Net3 203 is expired and the prefix delegation of P12::/64 from Net1 201 to Net3 203 is also expired.

The routing table update may be limited in scope depending on the network configuration. In general, the update will not go higher than necessary, and may not go beyond a gateway, a peering point, or a border gateway which is common to both Net1 201 and Net3 203. For example, if Net1 201 and Net3 203 are both sub-networks of the network 204, or if the network 204 is a common transit network to Net1 201 and Net 3 203, then the routing table update from Net3 203 will not go beyond the network 204.

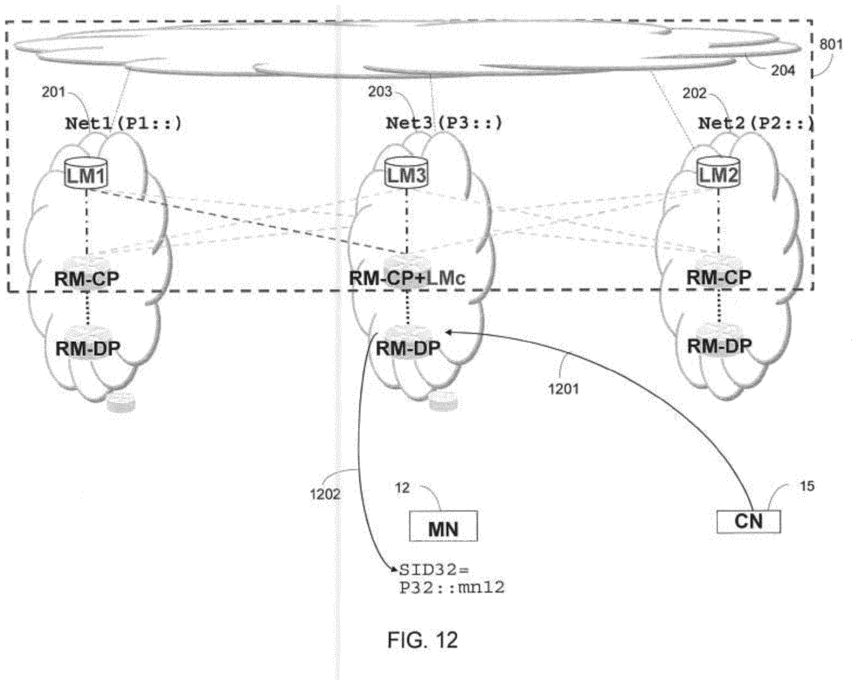

FIGURE 12 illustrates an example of expiration of optimized route mobility management in a split DP-CP environment. In some scenarios, a move timer may be set in the prefix delegation to move the IP address from Net1 201 to Net3 203. The move timer may be long enough that the mobility support for the applications that were handed over from Net1 201 to Net3 203 is no longer necessary. For example, such applications may have terminated and there may be no more active sessions that were handed over and are still using SID12. In such a case, there is no need to keep the IP prefix P12:: in Net3 203, so the prefix is expired. The MN 12 then has only the one session identifier SID32, as is shown in FIGURE 12. Thus, the incoming packets from the CN 15 to the MN 12 are routed using a route with session ID SID32, as indicated by the route lines 1201-1202. One advantage of expiring the prefix P12:: at Net3 203 is improvement of IP prefix aggregation for the routing tables. In order to accomplish this, the routing tables may need to be updated again to move the prefix P12:: back to Net1 201. However, it not necessary to perform the routing table update(s) immediately. Such routing update(s) can be performed in batch mode together with other updates in order to minimize signaling.

Because it may take a long period of time to update the routing table, a delay timer may also be used to delay making the prefix P12::/64 available in Net1 201. After the delegation timer to delegate the prefix to Net3 203 expires, it may also be desirable to wait until the routing update has reached RM-DP function at Net1 201 before the prefix P12::/64 is made available in Net1 201. Then the location management server LM1 for Net1 201 no longer needs to keep the information that P12::/64 was allocated to Net3 203.

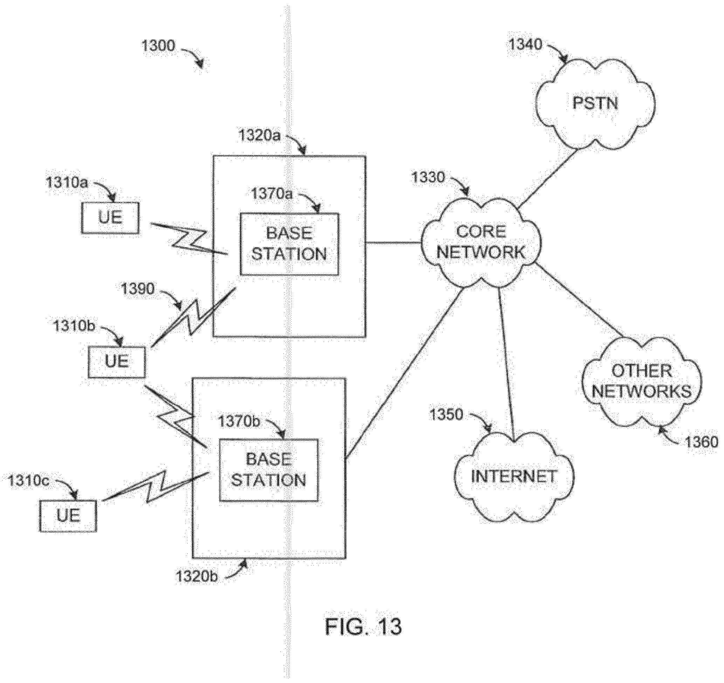

FIGURE 13 illustrates an example communication system 1300 that may be used for implementing the devices and methods disclosed herein. In general, the system 1300 enables multiple wireless users to transmit and receive data and other content. The system 1300 may implement one or more channel access methods, such as code division multiple access (CDMA), time division multiple access (TDMA), frequency division multiple access (FDMA), orthogonal FDMA (OFDMA), or single-carrier FDMA (SC-FDMA).

In this example, the communication system 1300 includes user equipment (UE) 1310a-1310c, radio access networks (RANs) 1320a-1320b, a core network 1330, a public switched telephone network (PSTN) 1340, the Internet 1350, and other networks 1360. While certain numbers of these components or elements are shown in FIGURE 13, any number of these components or elements may be included in the system 1300.

The UEs 1310a-1310c are configured to operate and/or communicate in the system 1300. For example, the UEs 1310a-1310c are configured to transmit and/or receive wireless signals. Each UE 1310a-1310c represents any suitable end user device and may include such devices (or may be referred to) as a user equipment/device (UE), wireless transmit/receive unit (WTRU), mobile station, fixed or mobile subscriber unit, pager, cellular telephone, personal digital assistant (PDA), smartphone, laptop, computer, touchpad, wireless sensor, or other consumer electronics device.

The RANs 1320a-1320b here include base stations 1370a-1370b, respectively. Each base station 1370a-1370b is configured to wirelessly interface with one or more of the UEs 1310a-1310c to enable access to the core network 1330, the PSTN 1340, the Internet 1350, and/or the other networks 1360. For example, the base stations 1370a-1370b may include (or be) one or more of several well-known devices, such as a base transceiver station (BTS), a Node-B (NodeB), an evolved NodeB (eNodeB), a Home NodeB, a Home eNodeB, a site controller, an access point (AP), a wireless router, a server, a switch, or any other suitable processing entity with a wired or wireless network.

In the embodiment shown in FIGURE 13, the base station 1370a forms part of the RAN 1320a, which may include other base stations, elements, and/or devices. Also, the base station 1370b forms part of the RAN 1320b, which may include other base stations, elements, and/or devices. Each base station 1370a-1370b operates to transmit and/or receive wireless signals within a particular geographic region or area, sometimes referred to as a "cell." In some embodiments, multiple-input multiple-output (MIMO) technology may be employed having multiple transceivers for each cell.

The base stations 1370a-1370b communicate with one or more of the UEs 1310a-1310c over one or more air interfaces 1390 using wireless communication links. The air interfaces 1390 may utilize any suitable radio access technology.

It is contemplated that the system 1300 may use multiple channel access functionality, including such schemes as described herein. In particular embodiments, the base stations 1370a-1370b and UEs 1310a-1310c are configured to implement the Long Term Evolution wireless communication standard (LTE), LTE Advanced (LTE-A), and/or LTE Broadcast (LTE-B). Of course, other multiple access schemes and wireless protocols may be utilized.

The RANs 1320a-1320b are in communication with the core network 1330 to provide the UEs 1310a-1310c with voice, data, application, Voice over Internet Protocol (VoIP), or other services. Understandably, the RANs 1320a-1320b and/or the core network 1330 may be in direct or indirect communication with one or more other RANs (not shown). The core network 1330 may also serve as a gateway access for other networks (such as PSTN 1340, Internet 1350, and other networks 1360). In addition, some or all of the UEs 1310a-1310c may include functionality for communicating with different wireless networks over different wireless links using different wireless technologies and/or protocols.

Although FIGURE 13 illustrates one example of a communication system, various changes may be made to FIGURE 13. For example, the communication system 1300 could include any number of UEs, base stations, networks, or other components in any suitable configuration.

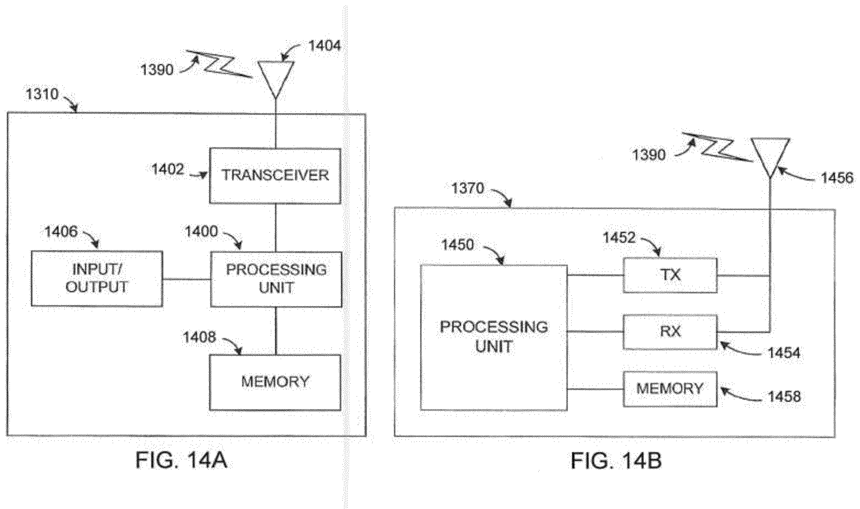

FIGURES 14A and 14B illustrate example devices that may be used for implementing the methods and teachings disclosed herein. In particular, FIGURE 14A illustrates an example UE 1310, and FIGURE 14B illustrates an example base station 1370. These components could be used in the system 1300, the networks 201-203, or in any other suitable system.

As shown in FIGURE 14A, the UE 1310 includes at least one processing unit 1400. The processing unit 1400 implements various processing operations of the UE 1310. For example, the processing unit 1400 could perform signal coding, data processing, power control, input/output processing, or any other functionality enabling the UE 1310 to operate in the system 1300. The processing unit 1400 also supports the methods and teachings described in more detail below. For example, the processing unit 1400 is configured to control or support operations of the UE 1310 according to the route mobility management standards and principles described herein. Each processing unit 1400 includes any suitable processing or computing device configured to perform one or more operations. Each processing unit 1400 could, for example, include a microprocessor, microcontroller, digital signal processor, field programmable gate array, or application specific integrated circuit.

The UE 1310 also includes at least one transceiver 1402. The transceiver 1402 is configured to modulate data or other content for transmission by at least one antenna 1404. The transceiver 1402 is also configured to demodulate data or other content received by the at least one antenna 1404. Each transceiver 1402 includes any suitable structure for generating signals for wireless transmission and/or processing signals received wirelessly. Each antenna 1404 includes any suitable structure for transmitting and/or receiving wireless signals. One or multiple transceivers 1402 could be used in the UE 1310, and one or multiple antennas 1404 could be used in the UE 1310. Although shown as a single functional unit, a transceiver 1402 could also be implemented using at least one transmitter and at least one separate receiver.

The UE 1310 further includes one or more input/output devices 1406. The input/output devices 1406 facilitate interaction with a user. Each input/output device 1406 includes any suitable structure for providing information to or receiving information from a user, such as a speaker, microphone, keypad, keyboard, display, touch screen, or other interface device.

In addition, the UE 1310 includes at least one memory 1408. The memory 1408 stores instructions and data used, generated, or collected by the UE 1310. For example, the memory 1408 could store software or firmware instructions executed by the processing unit(s) 1400 and data used to reduce or eliminate interference in incoming signals. Each memory 1408 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIGURE 14B, the base station 1370 includes at least one processing unit 1450, at least one transmitter 1452, at least one receiver 1454, one or more antennas 1456, and at least one memory 1458. The processing unit 1450 implements various processing operations of the base station 1370, such as signal coding, data processing, power control, input/output processing, or any other functionality. The processing unit 1450 can also support the methods and teachings described in more detail below. For example, the processing unit 1450 is configured to control or support operations of the base station 1370 according to the route mobility management standards and principles described herein. Each processing unit 1450 includes any suitable processing or computing device configured to perform one or more operations. Each processing unit 1450 could, for example, include a microprocessor, microcontroller, digital signal processor, field programmable gate array, or application specific integrated circuit.

Each transmitter 1452 includes any suitable structure for generating signals for wireless transmission to one or more UEs or other devices. Each receiver 1454 includes any suitable structure for receiving and processing signals from one or more UEs or other devices. Although shown as separate components, the at least one transmitter 1452 and the at least one receiver 1454 could be combined into a transceiver. Each antenna 1456 includes any suitable structure for transmitting and/or receiving wireless signals. While a common antenna 1456 is shown here as being coupled to both the transmitter 1452 and the receiver 1454, one or more antennas 1456 could be coupled to the transmitter(s) 1452, and one or more separate antennas 1456 could be coupled to the receiver(s) 1454. Each memory 1458 includes any suitable volatile and/or non-volatile storage and retrieval device(s).

Additional details regarding UEs 1310 and base stations 1370 are known to those of skill in the art. As such, these details are omitted here for clarity.

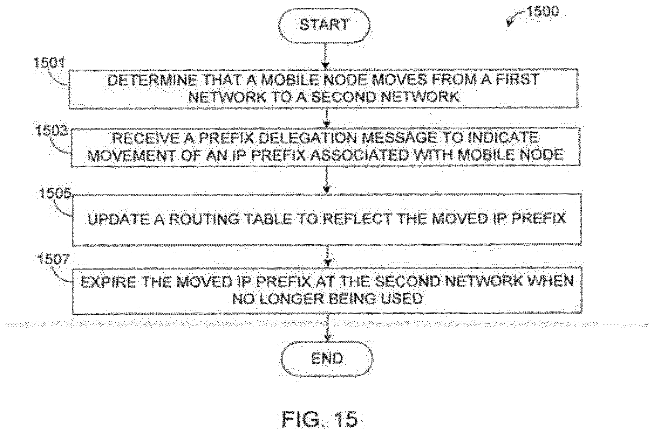

FIGURE 15 illustrates a method for optimized route mobility management according to this disclosure. The method 1500 shown in FIGURE 15 is based on the key concepts described above. The method 1500 may be performed in association with one or more of the components described in FIGURES 2 through 14B. However, the method 1500 could also be used with any other suitable device or system.

At operation 1501, a device determines that a mobile node moves from a first network to a second network. For example, this may include the access/gateway router 213 in Net3 203 determining that the MN 12 moves from Net1 201 to Net3 203.

In response to determining the movement of the mobile node, at operation 1503, the device receives a prefix delegation message from a router of the first network. This may include the access/gateway router 213 receiving a prefix delegation message from the access/gateway router 211 in Net1 201. The prefix delegation message is configured to indicate movement of an IP prefix associated with a communication session of the mobile node from the first network to the second network. The prefix delegation message includes the IP prefix (e.g., P12::/64) previously allocated to the first network.

At operation 1505, the device updates a routing table to reflect the moved IP prefix. This may include the access/gateway router 213 (or another component of Net3 203) updating the routing table. In some embodiments, the routing table update is postponed until a time for a routing table batch update event. If the routing table update has not yet occurred, the device may use a tunnel between the first network and the second network for the communication session of the mobile node until the routing table update occurs.

At operation 1507, when there are no more active communication sessions of the mobile node that use the moved IP prefix, the device expires the moved IP prefix at the second network.

Although FIGURE 15 illustrates one example of a method 1500 for optimized route mobility management, various changes may be made to FIGURE 15. For example, while shown as a series of steps, various steps shown in FIGURE 15 could overlap, occur in parallel, occur in a different order, or occur multiple times. Moreover, some steps could be combined or removed and additional steps could be added according to particular needs.

Embodiments of this disclosure provide optimized route mobility management by moving one or more IP addresses without the use of a tunnel. The optimized route mobility management methods and systems disclosed herein can be used with or without network function virtualization (NFV), such as in the context of a software defined network (SDN). The disclosed embodiments enable the co-existence of networks with and without NFV/SDN, and therefore enable compatibility between the networks, as well as enabling smooth transition to NFV/SDN. The disclosed embodiments may be used in conjunction with 3GPP, WiMAX, 3GPP2, WLAN and any future converged core network products., as well as any wireless access network environment, including 3GPP, WLAN, WiMAX, 3GPP2, and the like.

The disclosed optimized route mobility management methods provide a number of optional components, and each of these optional components can be chosen separately and as needed, e.g., depending on whether the time taken to complete that mechanism is short enough to support handover session continuity of the particular application.

In embodiments without NFV/SDN, the routing table updates may not be performed very quickly. In such cases, one or more existing tunneling mechanisms may be used, when needed, to facilitate the completion of the routing table updates. Such tunneling and concomitant non-optimized routes may occur only for the initial packets prior to the completion of the routing table updates. When tunneling is used prior to completion of routing table updates, the routing table updates can be batched and performed at regularly scheduled intervals to avoid excessive mobility management signaling.

In some embodiments, some or all of the functions or processes of the one or more of the devices are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, mean to include, be included within, interconnect with, contain, be contained within, connect to or with, couple to or with, be communicable with, cooperate with, interleave, juxtapose, be proximate to, be bound to or with, have, have a property of, or the like.

## Claims

1. A method for optimized route mobility management, the method comprising:
determining (1501) that a mobile node moves from a first network to a second network;
in response to determining the movement of the mobile node, receiving (1503), at an access/gateway router of the second network, a prefix delegation message from a router of the first network, the prefix delegation message configured for movement of an IP prefix associated with a communication session of the mobile node from the first network to the second network, the prefix delegation message comprising the IP prefix previously allocated to the first network;
updating (1505) a routing table to reflect the moved IP prefix;
deprecating the IP prefix;
initializing a deprecation timer with a predetermined deprecation time period for the deprecated IP prefix;
re-initializing the deprecation timer with the predetermined deprecation time period if the IP prefix is used in the first network; and
expiring (1507) the deprecated IP prefix when the deprecation timer expires.

2. The method of Claim 1, wherein the routing table update is postponed until a routing table batch update event.

3. The method of Claim 2, further comprising:
when the routing table update has not yet occurred, using a tunnel between the first network and the second network for the communication session of the mobile node until the routing table update occurs.

4. The method of Claim 3, further comprising:
initializing a tunnel timer with a predetermined tunnel time period when the tunnel is formed; and
when the tunnel timer expires, tearing down the tunnel.

5. The method of Claim 1, wherein the first and second networks are part of a software defined network (SDN).

6. An apparatus for optimized route mobility management, the apparatus comprising:
at least one memory; and
at least one processor coupled to the at least one memory, the at least one processor (1450) configured to:
determine that a mobile node (12) moves from a first network (201) to a second network (203);
in response to determining the movement of the mobile node (12), receive a prefix delegation message from a router of the first network, the prefix delegation message configured for movement of an IP prefix associated with a communication session of the mobile node (12) from the first network (201) to the second network (203), the prefix delegation message comprising the IP prefix previously allocated to the first network (201);
update a routing table to reflect the moved IP prefix;
deprecate the IP prefix;
initialize a deprecation timer with a predetermined deprecation time period for the deprecated IP prefix;
re-initialize the deprecation timer with the predetermined deprecation time period if the IP prefix is used in the first network (201); and
expire the deprecated IP prefix when the deprecation timer expires.

7. The apparatus of Claim 6, wherein the routing table update is postponed until a routing table batch update event.

8. The apparatus of Claim 7, wherein the at least one processor is further configured to:
when the routing table update has not yet occurred, use a tunnel between the first network (201) and the second network (203) for the communication session of the mobile node (12) until the routing table update occurs.

9. The apparatus of Claim 8, wherein the at least one processor is further configured to:
initialize a tunnel timer with a predetermined tunnel time period when the tunnel is formed; and
when the tunnel timer expires, tear down the tunnel.

10. The apparatus of Claim 6, wherein the first and second networks (201, 203) are part of a software defined network (SDN).

## Patentansprüche

1. Verfahren zur optimierten Routenmobilitätsverwaltung, wobei das Verfahren Folgendes umfasst:
Bestimmen (1501), dass ein mobiler Knoten sich von einem ersten Netzwerk zu einem zweiten Netzwerk bewegt;
als Reaktion auf das Bestimmen der Bewegung des mobilen Knotens Empfangen (1503) einer Präfixdelegierungsnachricht von einem Router des ersten Netzwerks an einem Zugangs-/Gateway-Router des zweiten Netzwerks, wobei die Präfixdelegierungsnachricht für eine Bewegung eines IP-Präfixes, das mit einer Kommunikationssitzung des mobilen Knotens assoziiert ist, von dem ersten Netzwerk zu dem zweiten Netzwerk konfiguriert ist, wobei die Präfixdelegierungsnachricht das IP-Präfix umfasst, das vorher dem ersten Netzwerk zugeordnet war;
Aktualisieren (1505) einer Routing-Tabelle, um das IP-Präfix, das sich bewegt hat, widerzuspiegeln;
Veralten des IP-Präfixes;
Initialisieren eines Veraltungszeitgebers mit einem vorbestimmten Veraltungszeitraum für das veraltete IP-Präfix;
erneutes Initialisieren des Veraltungszeitgebers mit einem vorbestimmten Veraltungszeitraum, falls das IP-Präfix in dem ersten Netzwerk verwendet wird; und
Ablaufen (1507) des veralteten IP-Präfixes, wenn der Veraltungszeitgeber abläuft.

2. Verfahren nach Anspruch 1, wobei die Routing-Tabellenaktualisierung bis zu einem Routing-Tabellen-Batch-Aktualisierungsereignis aufgeschoben wird.

3. Verfahren nach Anspruch 2, ferner umfassend:
wenn die Routing-Tabellenaktualisierung noch nicht erfolgt ist, Verwenden eines Tunnels zwischen dem ersten Netzwerk und dem zweiten Netzwerk für die Kommunikationssitzung des mobilen Knotens, bis die Routing-Tabellenaktualisierung erfolgt.

4. Verfahren nach Anspruch 3, ferner umfassend:
Initialisieren eines Tunnelzeitgebers mit einem vorbestimmten Tunnelzeitraum, wenn der Tunnel gebildet wird; und
wenn der Tunnelzeitgeber abläuft, Abreißen des Tunnels.

5. Verfahren nach Anspruch 1, wobei das erste und das zweite Netzwerk ein Teil eines Software-definierten Netzwerks (SDN) sind.

6. Vorrichtung zur optimierten Routenmobilitätsverwaltung, wobei die Vorrichtung Folgendes umfasst:
mindestens einen Speicher; und
mindestens einen Prozessor, der an den mindestens einen Speicher gekoppelt ist, wobei der mindestens eine Prozessor (1450) zu Folgendem konfiguriert ist:
Bestimmen, dass ein mobiler Knoten (12) sich von einem ersten Netzwerk (201) zu einem zweiten Netzwerk (203) bewegt;
als Reaktion auf das Bestimmen der Bewegung des mobilen Knotens (12) Empfangen einer Präfixdelegierungsnachricht von einem Router des ersten Netzwerks, wobei die Präfixdelegierungsnachricht für eine Bewegung eines IP-Präfixes, das mit einer Kommunikationssitzung des mobilen Knotens (12) assoziiert ist, von dem ersten Netzwerk (201) zu dem zweiten Netzwerk (203) konfiguriert ist, wobei die Präfixdelegierungsnachricht das IP-Präfix umfasst, das vorher dem ersten Netzwerk (201) zugeordnet war;
Aktualisieren einer Routing-Tabelle, um das IP-Präfix, das sich bewegt hat, widerzuspiegeln;
Veralten des IP-Präfixes;
Initialisieren eines Veraltungszeitgebers mit einem vorbestimmten Veraltungszeitraum für das veraltete IP-Präfix;
erneutes Initialisieren des Veraltungszeitgebers mit dem vorbestimmten Veraltungszeitraum, falls das IP-Präfix in dem ersten Netzwerk (201) verwendet wird; und
Ablaufen des veralteten IP-Präfixes, wenn der Veraltungszeitgeber abläuft.

7. Vorrichtung nach Anspruch 6, wobei die Routing-Tabellenaktualisierung bis zu einem Routing-Tabellen-Batch-Aktualisierungsereignis aufgeschoben wird.

8. Vorrichtung nach Anspruch 7, wobei der mindestens eine Prozessor ferner zu Folgendem konfiguriert ist:
wenn die Routing-Tabellenaktualisierung noch nicht erfolgt ist, einen Tunnel zwischen dem ersten Netzwerk (201) und dem zweiten Netzwerk (203) für die Kommunikationssitzung des mobilen Knotens (12) zu verwenden, bis die Routing-Tabellenaktualisierung erfolgt.

9. Vorrichtung nach Anspruch 8, wobei der mindestens eine Prozessor ferner zu Folgendem konfiguriert ist:
Initialisieren eines Tunnelzeitgebers mit einem vorbestimmten Tunnelzeitraum, wenn der Tunnel gebildet wird; und
wenn der Tunnelzeitgeber abläuft, Abreißen des Tunnels.

10. Vorrichtung nach Anspruch 6, wobei das erste und das zweite Netzwerk (201, 203) Teil eines Software-definierten Netzwerks (SDN) sind.

## Revendications

1. Procédé de gestion de mobilité de route optimisée, le procédé comprenant :
la détermination (1501) qu'un nœud mobile se déplace d'un premier réseau à un second réseau ;
en réponse à la détermination du déplacement du nœud mobile, la réception (1503), au niveau d'un routeur d'accès/de passerelle du second réseau, d'un message de délégation de préfixe en provenance d'un routeur du premier réseau, le message de délégation de préfixe étant conçu pour déplacer un préfixe IP associé à une session de communication du nœud mobile du premier réseau au second réseau, le message de délégation de préfixe comprenant le préfixe IP précédemment alloué au premier réseau ;
la mise à jour (1505) d'une table de routage pour refléter le préfixe IP déplacé ;
la dépréciation du préfixe IP ;
l'initialisation d'une minuterie de dépréciation avec une période de dépréciation prédéterminée pour le préfixe IP déprécié ;
la réinitialisation de la minuterie de dépréciation avec la période de dépréciation prédéterminée si le préfixe IP est utilisé dans le premier réseau ; et
l'expiration (1507) du préfixe IP déprécié lorsque la minuterie de dépréciation expire.

2. Procédé selon la revendication 1, dans lequel la table de mise à jour de routage est reportée jusqu'à un événement de mise à jour par lot de table de routage.

3. Procédé selon la revendication 2, comprenant en outre lorsque la mise à jour de table de routage n'a pas encore eu lieu, l'utilisation d'un tunnel entre le premier réseau et le second réseau pour la session de communication du nœud mobile jusqu'à ce que la mise à jour de table de routage ait lieu.

4. Procédé selon la revendication 3, comprenant en outre :
l'initialisation d'une minuterie de tunnel avec une période de tunnel prédéterminée lorsque le tunnel est formé ; et
lorsque la minuterie de tunnel expire, le démantèlement du tunnel.

5. Procédé selon la revendication 1, dans lequel les premier et second réseaux font partie d'un réseau logiciel (SDN).

6. Appareil de gestion de mobilité de route optimisée, l'appareil comprenant :
au moins une mémoire ; et
au moins un processeur couplé à l'au moins une mémoire, l'au moins un processeur (1450) étant conçu pour :
déterminer qu'un nœud mobile (12) se déplace d'un premier réseau (201) à un second réseau (203) ;
en réponse à la détermination du déplacement du nœud mobile (12), recevoir un message de délégation de préfixe en provenance d'un routeur du premier réseau, le message de délégation de préfixe étant conçu pour déplacer un préfixe IP associé à une session de communication du nœud mobile (12) du premier réseau (201) au second réseau (203), le message de délégation de préfixe comprenant le préfixe IP précédemment alloué au premier réseau (201) ;
mettre à jour une table de routage pour refléter le préfixe IP déplacé ;
déprécier le préfixe IP ;
initialiser une minuterie de dépréciation avec une période de dépréciation prédéterminée pour le préfixe IP déprécié ;
réinitialiser la minuterie de dépréciation avec la période de dépréciation prédéterminée si le préfixe IP est utilisé dans le premier réseau (201) ; et
faire expirer le préfixe IP déprécié lorsque la minuterie de dépréciation expire.

7. Appareil selon la revendication 6, dans lequel la mise à jour de table de routage est reportée jusqu'à un événement de mise à jour par lot de table de routage.

8. Appareil selon la revendication 7, dans lequel l'au moins un processeur est en outre conçu pour :
lorsque la mise à jour de table de routage n'a pas encore eu lieu, utiliser un tunnel entre le premier réseau (201) et le second réseau (203) pour la session de communication du nœud mobile (12) jusqu'à ce que la mise à jour de table de routage ait lieu.

9. Appareil selon la revendication 8, dans lequel l'au moins un processeur est en outre conçu pour :
initialiser une minuterie de tunnel avec une période de tunnel prédéterminée lorsque le tunnel est formé ; et
lorsque la minuterie de tunnel expire, démanteler le tunnel.

10. Appareil selon la revendication 6, dans lequel les premier et second réseaux (201, 203) font partie d'un réseau logiciel (SDN).
